Europäisches Patentamt

European Patent Office

Office européen des brevets

(19)

(11) **EP 0 872 014 B1**

(12) # EUROPÄISCHE PATENTSCHRIFT

(45) Veröffentlichungstag und Bekanntmachung des Hinweises auf die Patenterteilung:
**27.10.1999 Patentblatt 1999/43**

(21) Anmeldenummer: **96943901.7**

(22) Anmeldetag: **07.12.1996**

(51) Int Cl.6: **H02P 9/30**

(86) Internationale Anmeldenummer:
**PCT/EP96/05490**

(87) Internationale Veröffentlichungsnummer:
**WO 97/25771 (17.07.1997 Gazette 1997/31)**

(54) **FAHRZEUGBORDNETZ**

VEHICLE ELECTRICAL SYSTEM

RESEAU DE BORD POUR VEHICULE

(84) Benannte Vertragsstaaten:
**DE FR GB IT SE**

(30) Priorität: **03.01.1996 DE 19600074**

(43) Veröffentlichungstag der Anmeldung:
**21.10.1998 Patentblatt 1998/43**

(73) Patentinhaber: **DaimlerChrysler AG
70567 Stuttgart (DE)**

(72) Erfinder:
- **UHLER, Rainer
  D-74889 Sinsheim (DE)**
- **ZIMMER, Markus
  D-63262 Neu-Isenburg (DE)**

(74) Vertreter: **Maute, Hans-Jürgen, Dipl.-Ing.
Daimler-Benz Aktiengesellschaft,
Intellectual Property Management,
Sedanstrasse 10/Geb. 17
89077 Ulm (DE)**

(56) Entgegenhaltungen:
EP-A- 0 378 075          EP-A- 0 631 372
EP-A- 0 637 868          DE-A- 4 041 220

- **AEROSPACE POWER, SAN DIEGO, AUG 3 - 7, 1992, Bd. 1, 3. August 1992, INSTITUTE OF ELECTRICAL AND ELECTRONICS ENGINEERS, Seiten 1.73-1.78, XP000366011 NOON J P ET AL: "DESIGN OF A MULTI-MODULE, MULTI-PHASE BATTERY CHARGER FOR THE NASA EOS SPACE PLATFORM TESTBED"**

**Beschreibung**

Die Erfindung betrifft ein Fahrzeugbordnetz.

Die Erzeugung elektrischer Energie im konventionellen Fahrzeugbordnetz erfolgt gewöhnlich mit Hilfe eines Drehstromgenerators. Die im Generator entstehende Drehspannung wird von einem Diodengleichrichter in die erforderliche Bordnetzgleichspannung umgewandelt. Für den Gleichrichter sind Schaltungen bekannt, in denen Gleichrichter-, Schottky- oder Zenerdioden zum Einsatz kommen. Dabei sind auch Kombinationen verschiedener Diodenausführungen in einem Gleichrichter denkbar. Parallelschaltungen von Dioden zur Erhöhung des Maxiamlstroms werden ebenfalls bei Bedarf eingesetzt.

Die Amplitude der Gleichrichterausgangsspannung wird von einem Spannungsregler, der mit dem Generatorerregerkreis verbunden ist, auf den für die Spannungsversorgung des Bordnetzes erforderlichen Wert geregelt.

Aus der DE 40 41 220 A1, von der die Erfindung ausgeht, ist ein Fahrzeugbordnetz mit einer gegenüber der Batteriespannung höheren Mittelvolt-Spannung und eine Hochvolt-Spannung bekannt. Es ist eine gemeinsame Mittelvolt-Spannungsschiene vorgesehen, die von einer spannungsgeregelten Wandleranordnung auf einer stabilisierten Spannung gehalten wird. Nachteilig ist hierbei, daß die Batterie durch einen Generator auf der untersten Spannungsebene geladen wird, was höhere Verluste im Generator bedingt im Vergleich zu einem Generator, der eine höhere Spannung erzeugt. Eine noch heute weit verbreitete Ausführung des Bordnetzes von Kraftfahrzeugen beruht auf der Regelung auf die Generatorausgangsspannung. Daraus ergibt sich der Nachteil, daß alle zwischen Generator und Batterie auftretenden Spannungsabfälle nicht berücksichtigt werden. Die Spannung von nominal 12 V liegt an der Batterie und am überwiegenden Teil der elektrischen Verbraucher an.

Aus einem Konferenzbeitrag bei der Aerospace Power, San Diego, 3.-7- August 1992, Bd. 1, IEEE, Seiten 1.73-1.78, XP000366011, von J.P.Noon et al., 'Design of a Multi-module, Multi-phase Battery Charger for the NASA EOS Space Platform Testbed', ist ein Satelliten-Bordnetz mit einer Batteriespannung von 64-84 V und einer höheren Busspannung von 120 V bekannt. Solarpanels speisen Energie in den Bus und laden über eine Parallelschaltung mehrerer Chopperstufen die Batterie. Bei Dunkelheit wird umgekehrt die Busspannung aus der Batteriespannung gewonnen.

Bei Einsatz von besonders leistungsstarken elektrischen Verbrauchern ist die niedrige Bordnetzspannung aufgrund der sich ergebenden hohen Stromstärken problematisch. Beispielsweise müssen die sich daraus ergebenden hohen Verluste bei der Auslegung der Kabelquerschnitte berücksichtigt werden. Kommen außerdem Halbleiterbauelemente in den leistungsstarken Verbrauchern zum Einsatz, so sind diese ebenfalls für die hohen Stromstärken zu dimensionieren, was zu einer Kostenerhöhung führt.

Der Erfindung liegt das Problem zugrunde, neben der konventionellen Bordnetzspannung U1 von nominal 12 V eine weitere, höhere Gleichspannungsebene U2 konstanter Spannung für leistungsstarke elektrische Verbraucher bereitzustellen.

Dieses Problem wird nach der Erfindung durch die im Anspruch 1 aufgeführten Merkmale gelöst. Weiterbildungen der Erfindung sind in den Unteransprüchen beschrieben.

Bei Einsatz von leistungselektronischen Schaltungen wie beispielsweise uni- oder bidirektionalen DC/DC-Wandlern sind insbesondere die bei Kraftfahrzeugen geltenden Vorschriften bzgl. der elektromagnetischen Verträglichkeit dieser Schaltungen zu beachten.

Wird neben der konventionellen Spannungsebene U1 von nominal 12V im Kraftfahrzeug eine zweite, höhere Gleichspannungsebene U2 für leistungsstarke Verbraucher eingeführt, und erfolgt die Kopplung der beiden Netze über einen Chopper, so ist dieser elektromagnetisch verträglich auszulegen.

Die Einführung einer zweiten, höheren Spannungsebene U2 wird ausgehend vom Generator konventioneller Bauart nach der Erfindung durch Einfügen einer leistungselektronischen Schaltung nach dem Prinzip des Mehrfach-Choppers zwischen Generator und Batterie erreicht. Ausführungsbeispiele und Ausgestaltungen der Erfindung werden nachstehend anhand der Zeichnung näher erläutert. Dabei zeigt:

   Fig. 1 das Schaltungskonzept eines Mehrfach-Choppers,
   Fig. 2 ein Beispiel für die Spannungserzeugung und
   Fig. 3 die Schaltung des Kraftfahrzeugbordnetzes mit Mehrfach-Chopper.

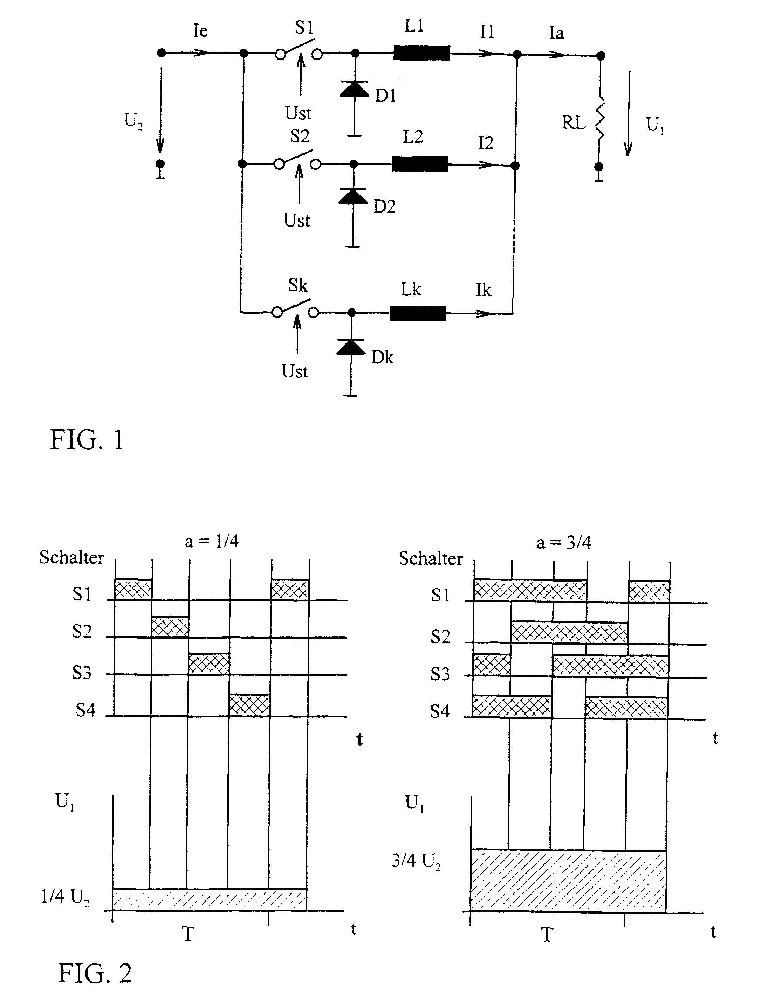

Die Funktionsweise des eingesetzten Mehrfach-Choppers 4 wird nachfolgend beschrieben. Ein Mehrfach-Chopper besteht aus der Parallelschaltung mehrerer Chopperstufen (Auf-/Abwärtswandler) wie sie beispielsweise in Fig. 1 dargestellt ist. Die von Choppern dieser Art bekannten Probleme hinsichtliche der EMV sind der pulsförmige Eingangsstrom und die pulsförmige Ausgangsspannung beim Betrieb ohne Zusatzdrossel.
Verzichtet man auf eine kontinuierliche Variation der Ausgangsspannung U1 und beschränkt sich auf eine bestimmte Anzahl diskret einstellbarer Ausgangsspannungsniveaus, so läßt sich durch den kombinierten Einsatz mehrerer Chopper die EMV der Schaltung durch die Glättung der Ströme Ie und Ia und die Vermeidung einer pulsförmigen Ausgangsspannung U1 erheblich verbessern.

Mehrere Chopperstufen (1, 2, .. k) werden gemäß Fig. 1 parallelgeschaltet, so daß sich der Laststrom in Abhängigkeit vom Steuermuster Ust1, Ust2, .. Ustk auf die angesteuerten Zweigströme I1, I2, .. Ik aufteilen kann. Hierdurch können die benötigten Bauteile für einen kleineren Strom dimensioniert werden. Die einzelnen Stufen sind durch die eingebauten Drosseln L1, L2, .. Lk sowie durch die getrennten Freilaufkreise über die Freilaufdioden D1, D2, .. Dk voneinander entkoppelt und beeinflussen sich gegenseitig nicht.

Die Anzahl der in Betrieb befindlichen, aktiven Stufen kann je nach gewünschtem Spannungsverhältnis von der Gesamtzahl der Chopperstufen abweichen. Dies bedeutet, daß nicht ständig alle Zweige an der Stromführung beteiligt sein müssen.

Die Steuerung der elektronischen Schalter S1, S2, .. Sk erfolgt nun derart, daß die Anzahl der angesteuerten Zweige über eine Taktperiode hinweg konstant bleibt. Diese Bedingung kann jedoch abhängig von der Stufenzahl k nur für bestimmte diskrete Tast- und damit Spannungsverhältnisse (Bruchteile bzw. Vielfache der Eingangsspannung Ue) erfüllt werden. Daraus folgt, daß die Anzahl der parallelgeschalteten Chopperstufen umso größer gewählt werden muß, je feiner die gewünschte Spannungsstufung ist.

Die in Abhängigkeit von der Gesamtstufenzahl (k) erreichbaren Spannungsniveaus sowie die zugehörigen Kombinationen von aktiven und gleichzeitig angesteuerten Zweigen (m,n) sind in Form einer Matrix in der Tabelle dargestellt. Die Elemente der Matrix ( a [n,m] ) geben die möglichen Spannungsverhältnisse für die jeweils gewählte Kombination an.

Tabelle:

| Kombinationsmatrix | | | | | | | |
|---|---|---|---|---|---|---|---|
| | m | 1 | 2 | 3 | 4 | .. | k |
| n 1 | | 1 | 1/2 | 1/3 | 1/4 | .. | 1/k |
| 2 | | | 1 | 2/3 | 2/4 | .. | 2/k |
| 3 | | | | 1 | 3/4 | .. | 3/k |
| 4 | | | | | 1 | .. | 4/k |
| .. | | | | | .. | | |
| k | | | | | | | 1 |

Hierin bedeuten:

k: Gesamtzahl der vorhandenen Stufen, m: Anzahl der in Betrieb befindlichen, aktiven Stufen, n: Zahl der gleichzeitig angesteuerten Stufen.

Es gilt: n < m < k

Die Ausgangsspannung läßt sich gemäß der Gleichung

$$U1 = a[n,m] \times U2$$

berechnen.

Die Verläufe der einzelnen Steuermuster Ust der aktiven Stufen besitzen gleiche Tastverhältnisse und sind gegeneinander phasenverschoben. Die Taktfrequenz der Signale (1/T) bleibt unabhängig von der Zahl der in Betrieb befindlichen Zweige konstant. Fig. 2 zeigt die Ansteuerpulsfolge für eine Anordnung mit vier elektronischen Schaltern und dem eingestellten Spannungsverhältnissen 1/4 und 3/4. Deutlich erkennbar ist die zu jedem Zeitabschnitt gleiche Anzahl der angesteuerten Stufen.

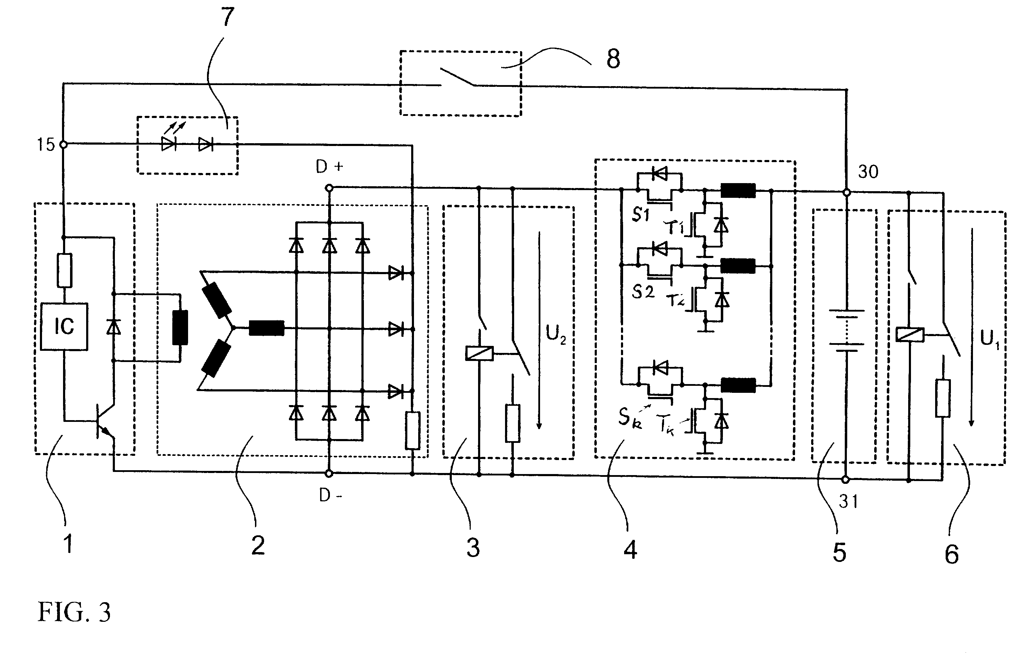

Die Einbindung der beschriebenen leistungselektronischen Schaltung eines Mehrfach-Choppers in das gesamte Fahrzeugbordnetz zur Erzeugung einer zweiten, höheren Spannungsebene U2 erfolgt nun entsprechend der in Fig. 3 dargestellten Anordnung. In ihr kommen folgende Komponenten zum Einsatz: ein konventioneller Generator-Regler 1 zur Regelung der Batteriespannung auf 12V, ein Generator mit Gleichrichter 2, ein Mehrfach-Chopper 4 und eine Ladekontrolle 7. Der Generator G wird erregt, wenn das Zündschloß 8 eingeschaltet ist.

Der 12V-Generator-Regler (IC) ist mit der Erregerwicklung des Generators verbunden. Er hat die Aufgabe, durch Variation des als Stellgröße im Regelkreis wirkenden Erregerstromes, die Batteriespannung U1 auf den gewünschten Wert von nominal 12V zu regeln. Es kann dabei ein konventioneller IC Spannungsregler für Kfz-Generatoren eingesetzt werden. Die Energieversorgung des Erregerkreises sowie die Messung der zu regelnden Spannung erfolgt nicht wie bisher üblich über Erregerdioden aus dem Generator sondern aus der geschalteten Batteriespannung an Klemme 15. Damit wird direkt, wie gewünscht, die Batteriespannung geregelt. Die vom Generator G an die Last 3 abgegebene Spannung ist natürlich die Spannung U2 der höheren Spannungsebene.

Der Generator G mit Erreger- und dreiphasiger Ständerwicklung erzeugt ein Drehspannungssystem, dessen Amplitude über den Erregerstrom einstellbar ist. Die Gleichrichtung erfolgt mit Hilfe einer oder mehrerer Diodenbrükken. Der bereits näher beschriebene Mehrfach-Chopper wird zwischen Generator und Batterie geschaltet. Gemäß Gleichung 1 erzeugt diese leistungselektronische Schaltung eine Ausgangsspannung U1 $U1 = a [n,m] \times U2$, die von der Anzahl der parallelen und aktiven Zweige und den Steuerimpulsfolgen abhängig ist. Da jedoch die Batteriespannung über den Erregerkreis auf einen Wert von nominal 12V geregelt wird, bedeutet dies gemäß Gleichung 1, daß sich die Eingangsspannung bzw. die vom Generator erzeugte Spannung nach der Beziehung

$$U2 = U1/a[n,m]$$

einstellt. Damit ergibt sich ein Fahrzeugbordnetz mit einem zweiten, höheren Spannungssystem U2, dessen Amplitude je nach Ausführung und Ansteuerung des Mehrfach-Choppers einstellbar ist. Die Spannung des batteriegepufferten Systems wird dabei unabhängig von der Amplitude und der Belastung des zweiten höheren Spannungssystems U2 auf den gewünschten Wert von nominal 12V geregelt. Dafür ist der Regler 1 mit dem Regelschaltkreis IC vorgesehen.

An den Ausgang des Mehrfach-Choppers 4, der dabei als Tiefsetzsteller wirkt, können die 12V-Lasten 6 angeschlossen werden. Die Versorgung von eventuell notwendigen Relaiserregerspulen kann sowohl aus Klemme 30, aus Klemme 15 oder direkt aus einer im Generator integrierten Diodenbrücke erfolgen. Ein wesentlicher Vorteil der Anordnung besteht darin, daß die Spannungswelligkeit im batteriegepufferten System reduziert werden kann. Die im Generator erzeugte Spannung besitzt eine der Gleichspannung überlagerte Welligkeit, die direkt an der Batterie und damit an den Verbrauchern anliegt. In der vorgeschlagenen der Batterie und damit an den Verbrauchern anliegt. In der vorgeschlagenen Anordnung wird die Spannungswelligkeit entsprechend der Beziehung

$$dU1 = a [n,m] \times dU2$$

reduziert.

Das vom Generator direkt erzeugte höhere Gleichspannungssystem U2 mit seiner vom eingesetzten Mehrfach-Chopper 4 abhängigen Spannungsamplitude kann zum Anschluß von leistungsstarken Verbrauchern 3 verwendet werden. Die Versorgung von eventuell notwendigen Relaiserregerspulen kann auch hier sowohl aus Klemme 30, aus Klemme 15, aus dem Spannungssystem U2 oder direkt aus einer im Generator integrierten Diodenbrücke erfolgen.

Der Energiefluß von U1 nach U2 bei stillstehendem Generator wird auf einfachste Weise durch Schließen der Schalter T1 ... Tk umgesteuert. Damit wirkt der Mehrfachchopper 4 als Hochsetzsteller für die Batteriespannung U1.

Eine optische Anzeige über den Spannungszustand des Generators ist beispielsweise mit Hilfe der in Fig. 3 dargestellten Ladekontrolle möglich. Zwischen Klemme 15 und dem dargestellten Mittelpunkt der 3-pulsigen Mittelpunktschaltung wird z.B. eine LED geschaltet. Der ebenfalls dargestellte ohmsche Widerstand zwischen Mittelpunkt und Klemme D- wirkt dabei als strombegrenzender Vorwiderstand für die LED. Solange die Generatorspannung kleiner als die an Klemme 15 anliegende Batteriespannung ist leuchtet die LED. Sie erlischt, sobald die Generatorspannung den Wert der Batteriespannung erreicht hat.

Die vorteilhafte Eigenschaften der Anordnung eines Fahrzeugbordnetzes mit einer zweiten, höheren Spannungsebene U2 mittels Mehrfach-Chopper sind:

- die Regelung der Batteriespannung U1 erfolgt direkt durch Messung der Spannung an Klemme 15
- die Amplitude der zweiten, höheren Spannungsebene U2 kann in Abhängigkeit von Ausführung und Ansteuerung des Mehrfach-Choppers in Stufen eingestellt werden
- eine Leistungsstellung ohne Beeinflußung des batteriegepufferten Spannungssystems ist möglich
- die Spannungswelligkeit im batteriegepufferten Spannungssystem kann reduziert werden und
- die Versorgung von Lasten an U2 aus U1 ist auch bei stillstehendem Generator möglich.

Die höhere Spannungsebene U2 für leistungsstarke Verbraucher hat insbesondere folgende Vorteile:

- es kann eine Reduzierung des Maximalstromes erreicht werden
- bei gleicher Verbraucherleistung reduzieren sich die ohmschen Verluste
- es können Leitungen mit geringerem Querschnitt verlegt werden, was einen Gewichtsvorteil erbringt
- die Halbleiterbauelemente werden hinsichtlich der Spannungsfestigkeit besser ausgenutzt
- bei gleicher Verbraucherleistung reduzieren sich die Halbleiterkosten, da sich die benötigte Chipfläche verkleinert
- bei gleicher Verbraucherleistung reduzieren sich die Halbleiterverluste

- reduzierte Halbleiterverluste bedeuten einen geringeren Kühlaufwand, der wiederum einen Gewichtsvorteil erbringt
- der Wirkungsgrad der Endstufen erhöht sich und
- bei gleicher Chipfläche kann die maximale Umrichterleistung erhöht werden.

**Patentansprüche**

1. Fahrzeugbordnetz mit einem Generator, dessen Erregerkreis von einem Spannungsregler beeinflußt wird, wobei neben einer ersten Spannungsebene (U1) von 12 Volt eine zweite, höhere Spannungsebene (U2) vorgesehen ist, wobei die zweite Spannungsebene (U2) am Ausgang des Generators ansteht und die erste, niedrigere Spannungsebene (U1) durch eine Parallelschaltung mehrerer Chopperstufen realisiert ist und wobei der Spannungsregler die erste niedrige Spannungsebene (U1) regelt.

2. Fahrzeugbordnetz nach Anspruch 1,
dadurch gekennzeichnet,
daß die Spannungsregelung (U2) der höheren Ebene die Spannung am Generator ist, die sich in ihrer Höhe durch ein einstellbares Übersetzungsverhältnis (a) aus der ersten Spannungsebene von 12V ergibt.

3. Fahrzeugbordnetz nach Anspruch 1 oder 2,
dadurch gekennzeichnet,
daß eine Schaltungsanordnung zur Spannungsumsetzung mit einem Schalter (S), einer Induktivität (Drossel L) und einer Diode (D) vorgesehen ist, die zusammen eine T-förmige Anordnung bilden, wobei sich in jedem Schenkel jedes Element befinden kann und die Diode in der Richtung eingebaut ist, daß sie einen kontinuierlichen Stromfluß in der Induktivität und im Verbraucher hervorruft.

4. Fahrzeugbordnetz nach Anspruch 3,
dadurch gekennzeichnet,
daß die Dioden durch aktive Bauelemente ersetzt sind.

5. Fahrzeugbordnetz nach Anspruch 3 oder 4,
dadurch gekennzeichnet,
daß die Anzahl der parallel geschalteten Wandler umgekehrt proportional zur Höhe der kleinsten erzielbaren Spannungsstufe ist, und daß die Tastverhältnisse jeder einzelnen der parallelgeschalteten Wandlerstufen konstant und so gegeneinander phasenverschoben sind, daß die Summe der Spannungen und Ströme am Ausgang zu jedem Zeitpunkt konstant ist.

6. Fahrzeugbordnetz nach Anspruch 3,
dadurch gekennzeichnet,
daß die Schalter (S1...Sk) so getaktet sind, daß die Anzahl der gleichzeitig angesteuerten Schalter während einer von der gewählten Frequenz abhängigen Taktperiode konstant ist.

7. Fahrzeugbordnetz nach einem der Ansprüche 3 bis 6,
dadurch gekennzeichnet,
daß die Schaltungsanordnung als Hochsetzsteller verwendet wird.

8. Fahrzeugbordnetz nach einem der Ansprüche 3 bis 6,
dadurch gekennzeichnet,
daß die Schaltungsanordnung als Hoch-/ Tiefsetzsteller (Buck-Boost-Konverter) verwendet wird.

**Claims**

1. A vehicle on-board electrical system with a generator, the excitation circuit of which is influenced by a voltage regulator, wherein apart from a first voltage level (U1) of 12 volts a second, higher voltage level (U2) is provided, wherein the second voltage level (U2) arises at the output of the generator and the first, lower voltage level (U1) is realised by a parallel circuit of several chopper stages and wherein the voltage regulator regulates the first, lower voltage level (U1).

2. A vehicle on-board electrical system according to claim 1, characterised in that the voltage regulation (U2) of the higher level is the voltage at the generator, the height of which results from an adjustable transformation ratio (a) from the first voltage level of 12 volts.

3. A vehicle on-board electrical system according to claim 1 or 2, characterised in that a circuit arrangement for voltage transformation with a switch (S), an inductance (choke L) and a diode (D) is provided, which together form a T-shaped arrangement, wherein each element can be disposed in each limb and the diode is incorporated in the direction that it causes a continuous current flow in the inductance and the load.

4. A vehicle on-board electrical system according to claim 3, characterised in that the diodes are replaced by active components.

5. A vehicle on-board electrical system according to claim 3 or 4, characterised in that the number of transformers connected in parallel is inversely proportional to the level of the smallest attainable voltage step, and that the keying ratios of each of the individual ones of the transformer stages connected in parallel are constant and so displaced in phase relative to one another that the sum of the voltages into currents at the output is constant at every instant in time.

6. A vehicle on-board electrical system according to claim 3, characterised in that actuation of the switches (S1 to Sk) is so timed that the number of simultaneously controlled switches during a cycle period dependent on the selected frequency is constant.

7. A vehicle on-board electrical system according to one of claims 3 to 6, characterised in that the circuit arrangement is used as a high-setting device.

8. A vehicle on-board electrical system according to one of claims 3 to 6, characterised in that the circuit arrangement is used as a high-setting / low-setting device (buck boost converter).

**Revendications**

1. Réseau de bord pour véhicule avec un générateur, dont le circuit d'excitation subit l'influence d'un régulateur de tension, où est prévu à côté d'un premier niveau de tension (U1) de 12 volts un deuxième niveau de tension plus élevé (U2), le deuxième niveau de tension (U2) s'appliquant à la sortie du générateur et le premier niveau de tension plus bas (U1) étant réalisé par un montage en parallèle de plusieurs étages de hacheur et où le régulateur de tension règle le premier niveau de tension bas (U1).

2. Réseau de bord pour véhicule selon la revendication 1,
caractérisé en ce que
le réglage de tension (U2) du niveau plus élevé est la tension au générateur dont la hauteur résulte d'un rapport de transformation réglable (a) à partir du premier niveau de tension de 12 V.

3. Réseau de bord pour véhicule selon la revendication 1 ou 2,
caractérisé en ce
qu'il est prévu un montage de commutation pour la transformation de la tension avec un commutateur (S), une inductance (bobine L) et une diode (D) qui constituent ensemble un agencement en forme de T, où peut se trouver dans chaque branche chaque élément et où la diode est montée dans la direction pour qu'elle provoque un flux de courant continu dans l'inductance et dans l'usager.

4. Réseau de bord pour véhicule selon la revendication 3,
caractérisé en ce que
les diodes sont remplacées par des composants actifs.

5. Réseau de bord pour véhicule selon la revendication 3 ou 4,
caractérisé en ce que
le nombre des convertisseurs montés en parallèle est inversement proportionnel à la hauteur du niveau de tension le plus petit pouvant être atteint, et en ce que les rapports cycliques de chacun des étages de convertisseur individuels montés en parallèle sont constants et sont décalés en phase les uns contre les autres de façon que la somme des tensions et des courants soit constante à la sortie à chaque instant.

6. Réseau de bord pour véhicule selon la revendication 3,
caractérisé en ce que
les commutateurs (S1 ...Sk) sont cadencés de façon que le nombre des commutateurs commandés en même temps, pendant une période de cadencement dépendant de la fréquence choisie soit constant.

7. Réseau de bord pour véhicule selon l'une des revendications 3 à 6,
caractérisé en ce que
le montage de commutation est utilisé comme montage d'élévation.

8. Réseau de bord pour véhicule selon l'une des revendications 3 à 6,
caractérisé en ce que
le montage de commutation est utilisé comme montage d'élévation et d'abaissement (convertisseur dévolteur-survolteur).

FIG. 1

FIG. 2

FIG. 3

D +

D -

U₂

U₁

IC

S1   T₁
S2   T₂
Sₖ   Tₖ

7

8

15

30

31

1   2   3   4   5   6

EP 0 872 014 B1